# EUROPEAN PATENT APPLICATION

(11) **EP 1 063 278 A2**
(43) Date of publication of application: **27.12.2000**
(21) Application number: 00202131.9
(22) Date of filing: 20.06.2000
(51) Int. Cl.: C10L 5/40

(54) **Synthetic fire logs**

(30) Priority: 24.06.1999 GB 9914675
(71) Applicant: Swedish Match UK Limited, High Wycombe, Buckinghamshire HP13 6EJ (GB)
(72) Inventor: Cox, Michael, 56436 Bankeryd (SE)
(74) Representative: Harman, Michael Godfrey

(57) **Abstract**

The present invention concerns a combustible mixture including a wax having a melting point between 45°C to 60°C, fibrous combustible material, and starch-containing flour or the like.

The wax may make up 30-60%w of the mixture and the fibres are wood fibres and make up 20-40%w of the mixture. The flour makes up 5-30%w of the mixture. The mixture includes an alkaline agent such as lime (calcium hydroxide), sodium hydroxide, and sodium silicate and water.

The invention also concerns a synthetic log, firelighter or the like formed from the above mixture formed by extrusion or moulding.

## Description

The present invention relates to synthetic fire logs, that is, logs manufactured as substitutes for natural wood logs.

Synthetic fire logs are usually composed of a mixture which includes wax and wood waste, a typical mixture ratio being 60% wax to 40% wood waste. The mixture is usually extruded whilst warm in a cylindrical shape and cut into convenient lengths to form the log, which harden on cooling.

The wax provides the main calorific value for the log, is easy to light, and provides a good flame luminosity. Some form of absorbent filler material such as wood, typically in the form of shavings or sawdust, is necessary though to hold the log together and stop the wax dripping of the log as it melts. The wax is somewhat absorbed into the wood, where it remains as it burns.

The plasticity of this mixture determines the extrusion conditions which are necessary to produce a well formed cylinder of acceptable strength.

The same mixture may be directly moulded, in particular to form firelighters. Plasticity of the mixture is still important, as a lower moulding pressure is needed to form the blocks, resulting a mechanically stronger product.

The object of the present invention is to efficiently provide a synthetic log with improved mechanical characteristics, such as plasticity and strength.

According to the present invention there is provided a mixture including a wax having a melting point between 45°C to 60°C, fibrous combustible material, and starch-containing flour or the like.

Preferably the wax makes up 30-60%w of the mixture. Preferably the fibres make up 20-40%w of the mixture. Preferably the flour or the like makes up 5-30%w of the mixture. Preferably the fibrous combustible material includes wood fibres. Preferably the mixture includes an alkaline agent and water. Preferably the alkaline agent makes up to 3%w of the mixture, and the water makes up to 20%w of the mixture. The alkaline agent may include lime (calcium hydroxide), sodium hydroxide, and sodium silicate.

According to another aspect of the invention, there is provided a synthetic log, firelighter or the like formed from a mixture as defined above.

The said log, firelighter or the like may be formed at least in part by extrusion, or at least in part by moulding.

The addition of the flour to the wood/wax mix increases the plasticity of the mixture. The flour has a very small particle size, relative to the wood fibres. It is likely that the small flour particles may be reducing the friction between the wood fibres. The starch contained in the flour may also have an effect Though the wax is has a higher calorific value than an equivalent weight of wood or flour, it is comparatively expensive, so replacing some of the wax with flour allows the cost of the mixture to be reduced.

The presence of alkali and water enhance the plasticity conferred by the flour. There are a number of possible reasons why this should occur. In combination with the water and alkali, the flour (in particular, the starch component) may form a gel, which lubricates the wood fibres during extrusion. The alkali, water and flour may somewhat block the pores of the wood fibres, making the fibres less absorbent of the wax.

The gel formed by the alkali, water and flour is also likely to bind the wood fibres together whilst the mixture is hot. The increased strength allows for faster extrusion and the mixture does not require the extrusion conditions to be kept at the precise tolerances usually needed. As the log dries, the strength of the log increases, and the log keeps an increased strength even at the high temperatures present when being burnt. Only partial drying is permitted, the log usually being wrapped in polythene after extrusion. Also, there is less post-extrusion swelling, again resulting in increased strength, and a denser, longer burning log.

Water remaining in the mixture causes the mixture to burn more slowly and at a lower temperature. Together with the generally lower wax content, this results in more efficient and complete combustion, so that the log lasts longer and less smoke is produced. Too much water however may adversely affect the burning properties of the mixture, and make the mixture too plastic.

A mixture for a synthetic log embodying the invention will now be described, by way of example.

The mixture comprises wood fibres, cereal flour, water, lime (calcium hydroxide) and paraffin wax. The proportions of the mixture may be varied according to the particular application, such as extruded logs, or moulded firelighters.

Two mixtures which have been found to have good mechanical characteristics are given in Table 1. These give mixtures having a high plasticity, and which can be moulded at high speeds. They also have good burning characteristics. They represent a considerable saving in the amount of wax usually present in conventional mixtures.

**Table 1**

| **Example** | | |
|---|---|---|
| Component | 1 | 2 |
| Wax | 45.8%w | 45.5%w |
| Wood fibre | 22.9%w | 22.7%w |
| Cereal Flour | 15.3%w | 15.1%w |
| Water | 15.3%w | 15.1%w |
| Lime | 0.8%w | 1.5%w |

Good mechanical properties may be obtained from a mixture whose proportion of wax is about ±10%, whose wood fibre, flour and water are about ±5%, and whose lime is within about ±1% of the proportions given for Example 1 (by ±10% of 45.8%w, a range of 35.8%w to 55.8%w is meant).

The wood may derive from any species, but ideally is hammer milled and passed through a 2 mm sieved. Suitable fibrous combustible material may be derived not just from wood chips from solid blocks such as the trunks and branches of trees, but also fibres from straw, cotton waste, paper, wool and such like.

The paraffin wax has a melting point between about 45°C and 60°C.

The particular matter, that is, the flour and the wood fibres, are mixed thoroughly with the water. The wax is then melted, added to the mixture, and again mixed thoroughly.

After mixing, the mixture is cooled to just below the wax's melting point, and then extruded through an aperture to form a continuous body of mixture, which is cut at regular intervals to form the logs. A similar process may be used in forming firelighters, the cut lengths resulting from the extrusion process then being placed on moulds and pressed. The logs may be extruded in a cylindrical shape, and the firelighters as a continuous slab having a rectangular cross section, but many other shapes are possible.

The mixture may also be directly moulded, but first extruding and cutting the shape into lengths ensures that correct weight of mixture is put in the mould.

The starch-containing flour may be derived from any cereal crop, such as wheat, maize, rice, or sorghum, or indeed any finely ground organic material, especially starchy material from non-cereal sources such as potato flour, tapioca and sago.

The lime provides a source of alkali; any other alkali of sufficiently high pH may be substituted, such as sodium or potassium hydroxide, sodium silicate, sodium carbonate, or ammonia. At least some water must be present in the mixture if the alkaline agent is to have an effect.

Other waxes may be substituted for the paraffin wax, such as stearic acid, or palm oil fatty acid distillate.

It has been found that a mixture comprising 30 - 60%w wax, 20 - 40%w wood, 5 - 30 %w cereal flour or the like, 0 - 20%w water and 0 - 3%w alkaline agent gives a mixture which is practical to extrude.

The lime has two effects upon the characteristics of the mixture. In conjunction with the flour, it further increases the plasticity of the mixture. Also, the presence of lime causes the ash resulting from burning a log composed of the mixture to be whiter and more powdery than is case for a conventionally composed log. This resultant ash appears more attractive and clean to the consumer, and is convenient to clear when the grate is being cleaned.

The substitution of sodium silicate or sodium hydroxide for the lime causes the ash resulting from burning the log to be fused together in a solid form. The ash may then be removed from the hearth as a single piece.

In a second embodiment of the invention, a block of the mixture is placed in a mould and compressed into block, the block having a tip coated in match head composition, that is, one of the compounds used to coat the head of conventional matches. Sodium compounds however decrease the moisture resistance of the match head compound, so calcium hydroxide is used as an alkaline agent in the block's moulded mixture.

Naturally, conventional additives could be included to change the characteristics of the mixture, such as flame colourants and perfumes.

## Claims

1. A mixture including a wax having a melting point between 45°C to 60°C, fibrous combustible material, and a starch-containing flour or the like.

2. A mixture according to Claim 1, wherein the wax makes up 30-60%w of the mixture.

3. A mixture according to either previous claim wherein the fibrous combustible material make up 20-40%w of the mixture.

4. A mixture according to any previous claim, wherein the flour or the like makes up 5-30%w of the mixture.

5. A mixture according to any previous claim, wherein the fibrous combustible material includes wood fibres.

6. A mixture according to any previous claim, wherein the mixture includes an alkaline agent and water.

7. A mixture according to claim 6, wherein the alkaline agent makes up to 3%w of the mixture.

8. A mixture according to either of claims 6 or 7, wherein the water makes up to 20%w of the mixture.

9. A synthetic log, firelighter or the like formed from a mixture according to any previous claim.
